Europäisches Patentamt

European Patent Office

Office européen des brevets

(19)

(11) Veröffentlichungsnummer: **0 087 071**
**B1**

(12) **EUROPÄISCHE PATENTSCHRIFT**

(45) Veröffentlichungstag der Patentschrift:
02.01.85

(21) Anmeldenummer: 83101254.7

(22) Anmeldetag: 10.02.83

(51) Int. Cl.³: **F 16 D 65/12, B 61 H 5/00**

(54) Wellenbremsscheibe, insbesondere für Scheibenbremsen von Schienenfahrzeugen.

(30) Priorität: 23.02.82 DE 8205003 U

(43) Veröffentlichungstag der Anmeldung:
31.08.83 Patentblatt 83/35

(45) Bekanntmachung des Hinweises auf die Patenterteilung:
02.01.85 Patentblatt 85/1

(84) Benannte Vertragsstaaten:
DE FR GB IT

(56) Entgegenhaltungen:
AT - B - 256 929
DE - A - 3 102 429
DE - B - 1 151 274

(73) Patentinhaber: Knorr-Bremse GmbH, Moosacher Strasse 80, D-8000 München 40 (DE)

(72) Erfinder: Berndt, Peter, Dr., Parksiedlung 15,
D-8011 Poing (DE)
Erfinder: Neumann, Günter,
Holzapfelkreutherstrasse 15, D-8000 München 70 (DE)
Erfinder: Wirth, Xaver, Dr., Birkhuhnweg 18,
D-8045 Ismaning (DE)

## Beschreibung

Die Erfindung bezieht sich auf eine Wellenbremsscheibe, insbesondere für Scheibenbremsen von Schienenfahrzeugen, mit einem einteiligen Reibring mit beidseitigen Ringkörpern und zwischen diesen angeordneten, radialen Kühlluftkanälen, die in Umfangsrichtung von mit den Ringkörpern einstückigen, radial verlaufenden Ventilationsrippen mit profiliert ausgebildeter, radial innerer Begrenzung begrenzt sind, wobei zumindest einige, über den Umfang gleichmäßig verteilt angeordnete Ventilationsrippen radial nach innen als Tragspeichen verlängert und mittels der Tragspeichen mit einer auf der abzubremsenden Welle sitzenden Nabe verbunden sind, und wobei die mit der Nabe verbundenen Ventilationsrippen wenigstens im Bereich der an die radial innere Begrenzung der Ringkörper radial nach innen anschließenden Tragspeichen in Axialrichtung schmäler als der gegenseitige Abstand der Ringkörper sind.

Eine derartige Wellenbremsscheibe ist durch das DE-U-8 101 854.1 bekanntgeworden. Bei dieser Wellenbremsscheibe weisen die Tragspeichen in axialer Richtung über ihre gesamte, radiale Erstreckung gleiche Breite auf. Weiterhin weisen wenigstens die mit den Tragspeichen verbundenen Ventilationsrippen in einem an die radial innere Begrenzung der Ringkörper nach radial außen anschließenden Bereich in Axialrichtung eine geringere Breite auf, als es dem Abstand der Ringkörper entspricht, wobei sich in diesem Bereich in Axialrichtung beidseitig zwischen den Ventilationsrippen und den Ringkörpern je eine Trennfuge befindet. Durch diese besondere Ausgestaltung der Wellenbremsscheibe werden die durch die Wärmedehnung des Reibringes, am Übergang der Ventilationsrippen zu den Ringkörpern auftretenden Wärmespannungen gering gehalten.

Der Neuerung liegt die Aufgabe zugrunde, eine Wellenbremsscheibe der eingangs genannten Art derart auszubilden, daß die Wärmespannungen an den mit der Nabe verbundenen Ventilationsrippen und den Tragspeichen ohne zusätzlichen Bauaufwand weiter gemindert werden.

Diese Aufgabe wird nach der Erfindung dadurch gelöst, daß die Tragspeichen in Axialrichtung eine Breite aufweisen, die vom Reibring radial nach innen zur Nabe hin sprungfrei abnimmt.

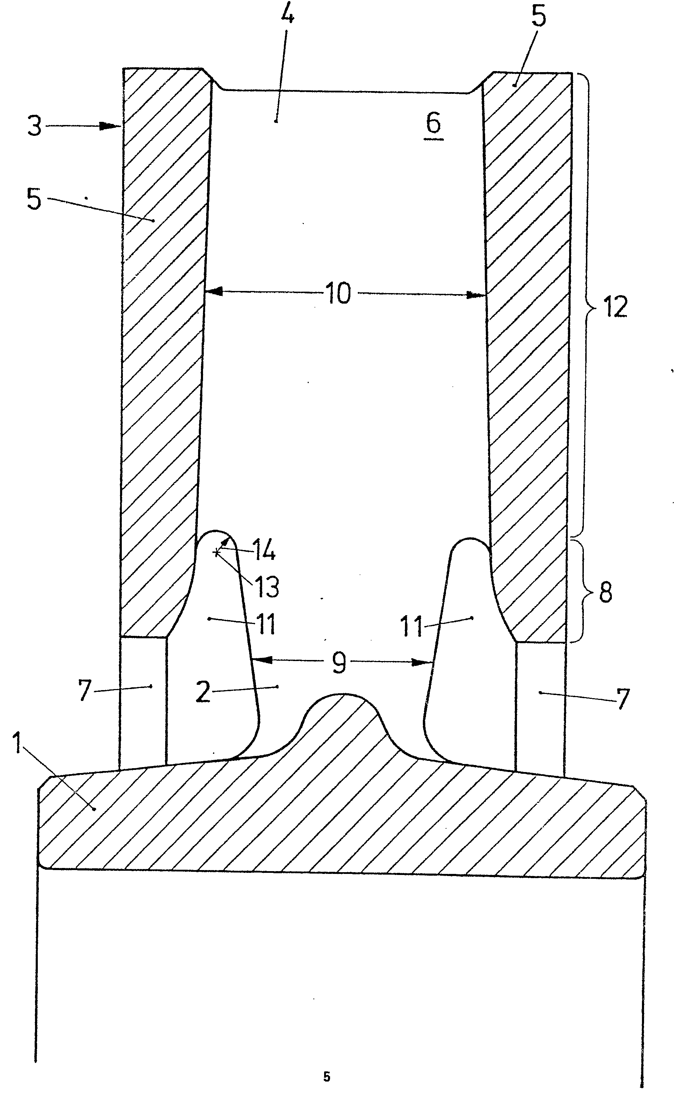

Als Ausführungsbeispiel der Erfindung ist in der Zeichnung eine Wellenbremsscheibe im Schnitt dargestellt.

Auf einer abzubremsenden, nicht dargestellten Welle sitzt wie üblich undrehbar eine Nabe 1, von welcher über den Umfang gleichmäßig verteilt mit ihr einstückige, radial nach außen ragende Tragspeichen 2 von einem Reibring 3 zugehörenden Ventilationsrippen 4 auskragen. Der Reibring 3 besteht aus zwei axial zueinander versetzten Ringkörpern 5, zwischen welchen die radialen, in Umfangsrichtung von den Ventilationsrippen 4 begrenzten Kühlluftkanäle 6 verlaufen.

Die Ventilationsrippen 4 und gegebenenfalls in Umfangsrichtung zwischen diesen verlaufende, sich nur über die radiale Breite der Ringkörper 5 erstreckende, nicht dargestellte zusätzliche Ventilationsrippen sind einstückig mit den Ringkörpern gegossen.

Zwischen dem Außenumfang der Nabe 1 und der radial inneren Begrenzung der Ringkörper 5 befinden sich Ringspalte 7 für den Eintritt der Kühlluft in die Kühlluftkanäle 6.

Die Ventilationsrippen 4 weisen in ihrem an die Nabe 1 anschließenden Abschnitt, den Tragspeichen 2, sowie in einem sich an diese anschließenden, sich zwischen den Ringkörpern 5 befindenden ersten Bereich 8 in Axialrichtung eine variable Breite 9 auf, welche an allen Stellen geringer ist als der lichte Abstand 10 zwischen den beiden Ringkörpern 5, wobei sich in diesem ersten Bereich 8 in Axialrichtung beiderseits zwischen den Ventilationsrippen 4 und den Ringkörpern 5 je eine Trennfuge 11 befindet. Die Breite 9 der Tragspeichen nimmt vom Reibring 3 radial nach innen zur Nabe 1 hin sprungfrei ab, die Tragspeichen 2 erhalten hierdurch eine die Spannungen bei Wärmedehnungen mindernde Gestalt. In einen sich nach radial außen an den ersten Bereich 8 anschließenden, zweiten Bereich 12 erstrecken sich die Ventilationsrippen 4 in üblicher Weise über den ganzen Abstand 10 und sind beidseitig wie üblich einstückig mit den Ringkörpern 5 verbunden. Der durch das radial äußere Ende der Trennfugen 11 gebildete Übergang zwischen den Bereichen 8 und 12 ist an den Ventilationsrippen 4 gerundet ausgebildet, d. h. die Enden der Trennfugen 11 sind gerundet ausgebildet. Die Rundungen sind dabei etwa halbkreisförmig ausgeführt, wobei sich die Rundungsmittelpunkte 13 in den Trennfugen 11 etwa in deren axial mittleren Bereich befinden. In der Zeichnung ist ein Rundungsradius 14 dargestellt. Auch der Ansatz der Tragspeichen 2 an der Nabe 1 ist allseitig ausgerundet ausgeführt. Abweichend hierzu kann der Bereich 8 jedoch auch entfallen, d. h., die die Tragspeichen 2 aufweisenden Ventilationsrippen können über die ganze, radiale Breite der Reibringe 5 mit diesen verbunden sein.

Die bereits erwähnten, sich in Umfangsrichtung zwischen den Ventilationsrippen 4 befindenden und höchstens eine der radialen Breite des Reibringes 3 entsprechende, radiale Länge aufweisenden zusätzlichen Ventilationsrippen können, wie bisher üblich, über ihre ganze, radiale Länge mit den Ringkörpern 5 verbunden sein oder ebenfalls, entsprechend den die Tragspeichen 2 aufweisenden Ventilationsrippen 4 des Ausführungsbeispiels, in einem radial inneren Bereich in Axialrichtung eingezogen sein, so daß hier den Trennfugen 11 entsprechende Trennfugen zwischen diesen zusätzlichen Ventilationsrippen und den Ringkörpern 5 gebildet werden.

## Patentanspruch

1. Wellenbremsscheibe, insbesondere für Scheibenbremsen von Schienenfahrzeugen, mit einem einteiligen Reibring (3) mit beidseitigen Ringkörpern (5) und zwischen diesen angeordneten, radialen Kühlluftkanälen (6), die in Umfangsrichtung von mit den Ringkörpern (5) einstückigen, radial verlaufenden Ventilationsrippen (4) mit profiliert ausgebildeter, radial innerer Begrenzung begrenzt sind, wobei zumindest einige, über den Umfang gleichmäßig verteilt angeordnete Ventilationsrippen (4) radial nach innen als Tragspeichen (2) verlängert und mittels der Tragspeichen (2) mit einer auf der abzubremsenden Welle sitzenden Nabe verbunden sind, und wobei die mit der Nabe (1) verbundenen Ventilationsrippen (4) wenigstens im Bereich der an die radial innere Begrenzung der Ringkörper (5) radial nach innen anschließenden Tragspeichen (2) in Axialrichtung schmäler als der gegenseitige Abstand (10) der Ringkörper (5) sind, dadurch gekennzeichnet, daß die Tragspeichen (2) in Axialrichtung eine Breite (9) aufweisen, die vom Reibring (3) radial nach innen zur Nabe (1) hin sprungfrei abnimmt.

## Claim

1. Axle-mounted brake disc, in particular for disc brakes of rail vehicles, with a one-piece friction ring (3) with annular bodies (5) on both sides, and radial cooling air channels (6) arranged between these which, in the circumferential direction, are limited by radially extending ventilation ribs (4) that are one-piece with the annular bodies (5) and with a radially inner limit that is of profiled construction, whereby at least some ventilation ribs (4) uniformly distributed over the circumference are elongated radially inwards as carrier spokes (2), and by means of the carrier spokes (2) are connected to a hub located on the axle to be braked, and whereby, at least in the zone of the carrier spokes (2) radially inwardly connected to the radially inner limit of the annular bodies (5), the ventilation ribs (4) connected to the hub (1) are narrower in the axial direction than the opposite clearance (10) of the annular bodies (5), characterised in that the carrier spokes (2) have in the axial direction a width (9) which decreases smoothly from the friction ring (3) radially inwards to the hub (1).

## Revendication

1. Disque de freinage pour arbre, en particulier pour des freins à disques de véhicules sur rails, avec une bague de friction (3), d'une pièce à corps annulaires (5) disposée des deux côtés et des canaux d'air de refroidissement (6) disposés entre ces derniers et qui sont limités dans le sens périphérique par des nervures de ventilation (4) s'étendant radialement et venues d'une pièce avec les corps de friction (5), lesdites nervures de ventilation (4) possédant une délimitation radialement intérieure en profilé, la réalisation étant telle qu'au moins quelques nervures de ventilation (4) qui sont réparties uniformément dans le sens périphérique, sont prolongées radialement vers l'intérieur en formant des rayons de support (2) et sont reliées à l'aide des rayons de support (2) avec un moyeu monté sur l'arbre à freiner, et que les nervures de ventilation (4) qui sont reliées au moyeu (1) sont, au moins dans la région des rayons de support (2) qui se raccordent radialement vers l'intérieur à la limitation radialement intérieure des corps annulaires (5), plus étroites, dans le sens axial, que la distance mutuelle (10) entre les corps annulaires (5), caractérisé par le fait que les rayons de support (2) possèdent, dans le sens axial, une largeur (9) qui décroît, sans àcoups, depuis l'anneau de friction (3), radialement vers l'intérieur, jusqu'au moyeu (1).

0 087 071